# EUROPEAN PATENT APPLICATION

(11) **EP 4 787 571 A1**
(43) Date of publication of application: **05.08.2026**
(21) Application number: 24870649.1
(22) Date of filing: 23.09.2024
(51) Int. Cl.: H01M 50/209, H01M 50/244, H01M 50/264

(54) **BATTERY PACK AND ELECTRIC DEVICE**

(30) Priority: 25.09.2023 CN 202311248429
(71) Applicant: BYD Company Limited, Shenzhen, Guangdong 518118 (CN)
(72) Inventor: WAN, Quanyou, Shenzhen, Guangdong 518118 (CN); LIU, Tao, Shenzhen, Guangdong 518118 (CN); ZHANG, Chengjun, Shenzhen, Guangdong 518118 (CN); SONG, Ru, Shenzhen, Guangdong 518118 (CN); ZHOU, Yanfei, Shenzhen, Guangdong 518118 (CN)
(74) Representative: Taor, Simon Edward William
(86) International application number: PCT/CN2024/120363
(87) International publication number: WO 2025/067105

(57) **Abstract**

A battery pack (100) and an electric device. The battery pack (100) comprises: a plurality of batteries (1); a housing assembly (2), in a cavity of which the plurality of batteries (1) are sequentially arranged in a first direction; and a pressing plate (3), which is arranged in the cavity and connected to the housing assembly (2), and extends in the first direction and is arranged above the plurality of batteries (1) to constrain the plurality of batteries (1), wherein the size of the pressing plate (3) in a second direction is not greater than the size of the batteries (1) in the second direction, and the second direction is perpendicular to the first direction.

## Description

### CROSS-REFERENCE TO RELATED APPLICATIONS

The present disclosure claims the benefit of priority to Chinese Patent Disclosure No. "202311248429.8" filed by BYD Co., Ltd. on September 25, 2023, titled "BATTERY PACK AND ELECTRICAL DEVICE", which is incorporated herein in its entirety.

### FIELD

The present disclosure relates to the technical field of batteries, specifically to a battery pack and an electrical device.

### BACKGROUND

In the related art, a pressure plate is arranged in a battery pack, and the battery is limited by completely covering the pressure plate, so that a large amount of structural adhesive needs to be coated between the pressure plate and the battery to ensure the connection effect between the pressure plate and the battery, and the amount of glue in the battery pack is large; In addition, the size of the pressure plate is large, resulting in a large volume and weight of the pressure plate, which increases the production cost.

### SUMMARY

The present disclosure is to solve one of the technical problems in the related art at least to a certain extent.

An object of the present disclosure is to disclose a battery pack in which a pressure plate can constrain the batteries to meet the lightweight design of the battery pack.

According to a first aspect of the present disclosure, a battery pack includes: a plurality of batteries; a shell assembly, wherein a plurality of the batteries are sequentially arranged in a first direction within a cavity of the shell assembly; a pressure plate disposed within the cavity and connected to the shell assembly, the pressure plate extending in the first direction and disposed above the plurality of batteries to constrain the plurality of batteries; wherein a dimension of the pressure plate in a second direction is not larger than a dimension of the battery in the second direction, and the second direction is disposed perpendicular to the first direction.

In the present disclosure, the pressure plate is connected to the shell assembly and positioned above the plurality of batteries to constrain the batteries, the pressure plate is positioned correspondingly to only partially over the plurality of batteries, thereby ensuring the effective constraint of the plurality of batteries while reducing the size and weight of the pressure plate, achieving a lightweight battery pack design. At the same time, the reduced size of the pressure plate can reduce its production cost.

According to a second aspect of the present disclosure, an electrical device includes the above-mentioned battery pack.

Additional aspects and advantages of the present disclosure will be set forth in part in the following description, and in part will be obvious from the following description, or may be learned by the practice of the disclosure.

### BRIEF DESCRIPTION OF THE DRAWINGS

FIG. 1 is an explosion diagram of a battery pack according to an embodiment of the present disclosure.
FIG. 2 is a schematic diagram of mating between a tray and a mounting block according to an embodiment of the present disclosure;
FIG. 3 is a schematic diagram of matching between a pressure plate and an insulating layer according to an embodiment of the present disclosure;
FIG. 4 is an explosion diagram of a pressure plate and an insulating layer according to an embodiment of the present disclosure;
FIG. 5 is a partially enlarged view circled at A in FIG. 4.
FIG. 6 is a top view of a battery pack according to an embodiment of the present disclosure;
FIG. 7 is a schematic diagram of matching between a positioning portion and a positioning mating portion according to an embodiment of the present disclosure.
FIG. 8 is a schematic diagram of an error prevention protrusion according to an embodiment of the present disclosure.
FIG. 9 is an explosion diagram of a battery pack according to an embodiment of the present disclosure.

### DETAILED DESCRIPTION

The embodiments of the present disclosure will be described in detail below, examples of the embodiments are shown in the accompanying drawings, wherein the same or similar reference signs throughout represent the same or similar elements or elements with the same or similar functions. The embodiments described below with reference to the accompanying drawings are exemplary and are only configured to explain the present disclosure, and should not be understood as limiting the present disclosure.

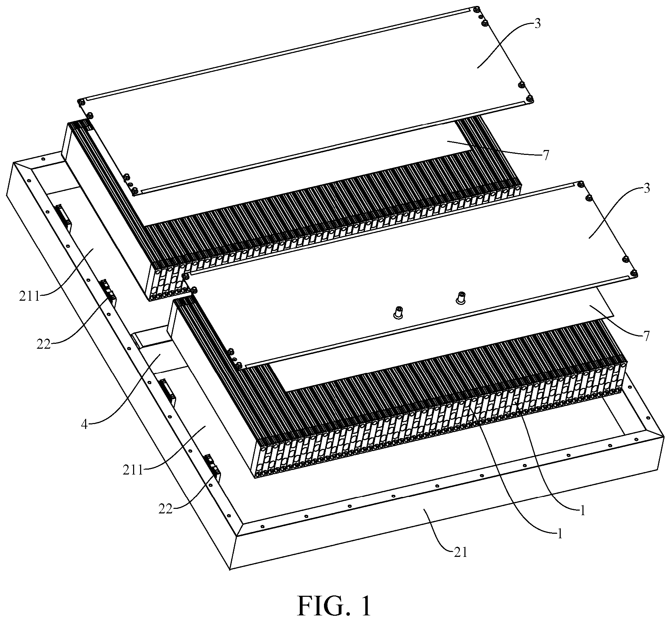

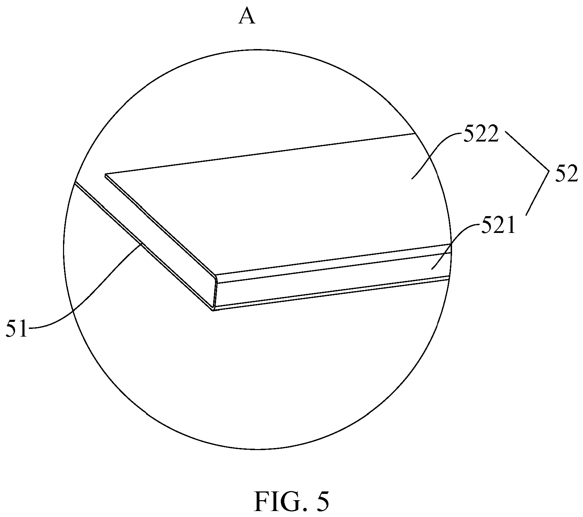

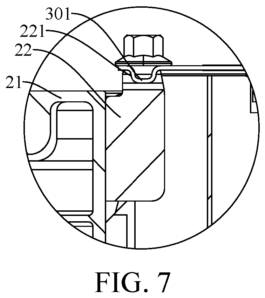

The battery pack 100 according to an embodiment of the present disclosure will be described with reference to FIG. 1 to FIG. 9.

The battery pack 100 according to an embodiment of the present disclosure includes a shell assembly 2, a pressure plate 3, and a plurality of batteries 1.

The shell assembly is arranged with a cavity, and the plurality of batteries 1 are sequentially arranged in the cavity in a first direction, the pressure plate 3 is positioned in the cavity and connected with the shell assembly 2. The pressure plate 3 extends in the first direction and is arranged above the plurality of batteries 1 to constrain the plurality of batteries 1, improve the stability of the batteries 1 in the cavity, and improve the reliability and safety of the battery pack 100.

The battery pack 100 is an energy storage device, a plurality of batteries 1 are arranged in the battery pack 100, which are electrically connected to each other. When placed within the cavity, these batteries 1 (i.e., the plurality of batteries 1) must be secured to ensure the reliable connections between the batteries 1 and between the batteries 1 and the electrical components within the battery pack 100. The pressure plate 3 in the present disclosure is arranged above the battery 1 to constraint on one side of the battery 1 vertically, enhancing the stability and reliability of the battery 1 within the cavity.

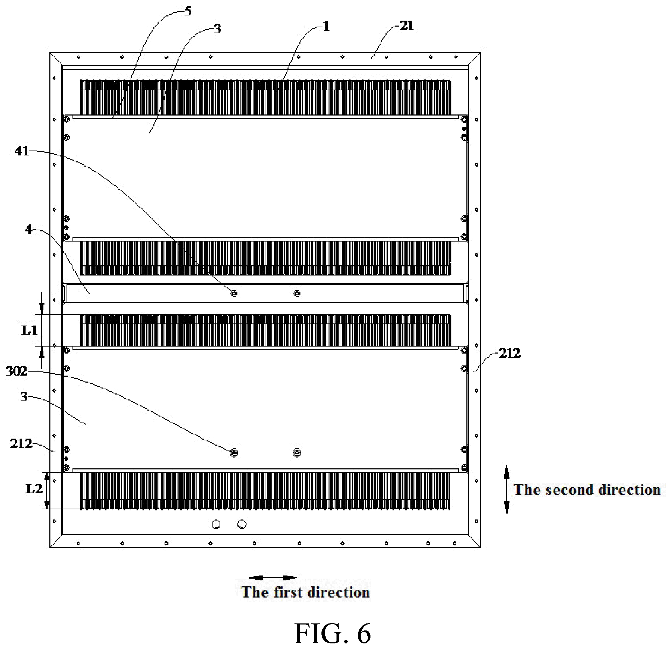

Referring to FIG. 6, a plurality of batteries 1 are arranged sequentially in a first direction, with a pressure plate 3 arranged above the batteries 1. The pressure plate 3 also extends in the first direction, and is connected to the shell assembly 2. Wherein, the dimension of the pressure plate 3 in a second direction is not larger than the dimension of the battery 1 in the second direction, and the second direction is perpendicular to the first direction.

The first direction and the second direction correspond to the length direction and the width direction of the pressure plate 3, the length direction and the width direction of the battery 1 respectively. The specific correspondence is related to the size of the pressure plate 3 and the size of the battery 1.

Combined with FIG. 1 and FIG. 6, in the present disclosure, the "first direction" corresponds to the length direction of the pressure plate 3, and the "second direction" corresponds to the width direction of the pressure plate 3; The battery 1 is constructed as a rectangular parallelepiped, and the "first direction" corresponds to the width direction of the battery 1 (also the arrangement direction of the plurality of batteries 1), and the "second direction" corresponds to the length direction of the battery 1. That is, the width direction of the pressure plate 3 corresponds to the length direction of the battery 1, and the width dimension of the pressure plate 3 is not larger than the length dimension of the battery 1, so that the pressure plate 3 can fully correspond to part of the battery 1, thereby effectively constraining the battery 1.

When the battery pack 100 is applied to an electrical device (such as a vehicle), the "first direction" can be one of the X direction, Y direction, and Z direction of the vehicle, and the "second direction" can be one of the other two of the X direction, Y direction, and Z direction of the vehicle, such as: the first direction is the X direction, and the second direction is the Y direction; The first direction is the Y direction, and the second direction is the X direction.

In the related art, the pressure plate 3 is arranged in the battery pack 100 to completely cover the battery 1 and constrain the battery 1. This requires a large amount of structural adhesive to be applied between the pressure plate 3 and the battery 1 to ensure a secure connection between the pressure plate 3 and the battery 1. The large amount of glue used in the battery pack 100 results in a heavy weight of the battery pack 100, which does not meet the lightweight design requirements. Furthermore, the large size of the pressure plate 3 increases its volume and weight, increasing production costs.

In the present disclosure, the pressure plate 3 is connected to the shell assembly 2 and arranged above the plurality of batteries 1 to constrain the batteries 1. Furthermore, the pressure plate 3 is only partially arranged corresponding to the plurality of batteries 1. This ensures that the plurality of batteries 1 are constrained while reducing the size and weight of the pressure plate 3, thereby achieving a lightweight design for the battery pack 100. At the same time, the reduced size of the pressure plate 3 can reduce the production cost of the pressure plate 3.

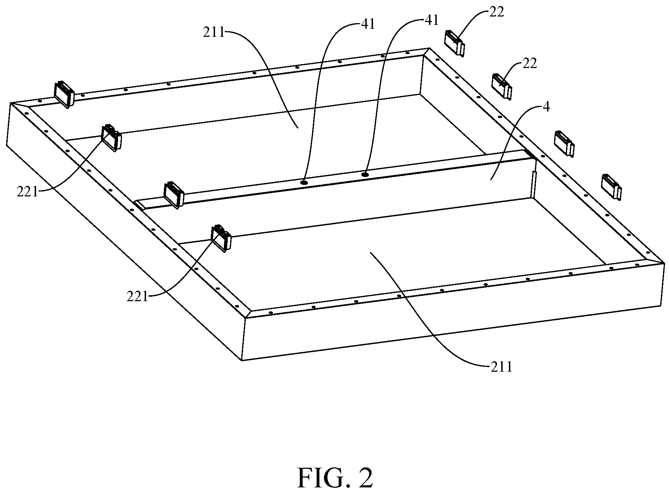

As shown in FIG. 2, in some embodiments of the present disclosure, the shell assembly 2 includes: a tray 21 and a mounting block 22. The tray 21 is used to accommodate the battery 1. The mounting block 22 is mounted on the tray 21 and is used to mount the pressure plate 3.

The mounting block 22 is the mounting carrier of the pressure plate 3, so that it is not need to design a mounting structure on the tray 21 that matches with the pressure plate 3, thereby the difficulty of developing and designing the tray 21 can be reduced. Referring to FIG. 2, the mounting block 22 may be arranged on the inner wall surface of the tray 21 and fixed to the tray 21 by welding or other connection methods. The pressure plate 3 is arranged above the mounting block 22 to support the pressure plate 3, thereby reducing the difficulty of connecting and mating the pressure plate 3 and the mounting block 22.

The pressure plate 3 is fixedly connected to the mounting block 22 to fix the position of the pressure plate 3 in the battery pack 100 and ensure the constraint effect of the pressure plate 3 on the battery 1. The pressure plate 3 and the mounting block 22 are connected and matched in various ways, for example, fastening the pressure plate 3 to the mounting block 22 with connectors (such as bolts, screws, rivets, etc.), or fastening the pressure plate 3 to the mounting block 22 with a snap-fit structure (such as hooks), etc., which are not specifically limited here.

In some optional embodiments of the present disclosure, the side beam 212 of the tray 21 is arranged with a clamping slot, and the clamping slot is clamped and matched with the pressure plate 3 to fix the pressure plate 3 in the tray 21.

In some optional embodiments of the present disclosure, the tray 21 and the pressure plate 3 abut against each other and have an interference fit to fix the pressure plate 3 in the tray 21.

Referring to FIG. 1, taking example of fixing by connection, a through hole is formed on the pressure plate 3 at a corresponding area of the mounting block 22, and a threaded fitting hole which is threadedly matched with the connecting piece is formed on the mounting block 22. The pressure plate 3 and the mounting block 22 can be fixedly connected by the threaded fitting of the connecting piece and the threaded fitting hole. The connection method is simple and reliable.

As shown in FIG. 2, in some embodiments of the present disclosure, the shell assembly 2 further includes a partition beam 4, which is arranged in the tray 21 and extends in the first direction. The partition beam 4 is used to separate the cavity of the shell assembly 2 to form two accommodating cavities 211 each for arranging a plurality of batteries.

Referring to FIG. 2, the two accommodating cavities 211 are arranged in the second direction, and the plurality of batteries 1 in each accommodating cavity 211 are arranged sequentially in the first direction.

Wherein, the cavities are divided by the partition beam 4 to form two accommodating cavities 211 arranged in the second direction. A plurality of batteries 1 are arranged in each accommodating cavity 211, and the plurality of batteries 1 are arranged in the first direction within the accommodation cavity 211. The arrangement of the partition beam 4 can improve the structural strength of the shell assembly 2, and can divide the cavity into a plurality of sub-cavities, thereby isolating the batteries 1 in the cavity.

In case the batteries 1 are identical, the number of batteries 1 may be increased in order to improve the energy storage effect of the battery pack 100. However, limited by size of battery pack 100, the number of batteries 1 arranged in the first direction is limited, and thus multiple groups of batteries 1 arranged sequentially in the first direction may be arranged to meet the design requirements of the size of the battery pack 100 while improving the energy storage performance of the battery pack 100. The setting of the partition beam 4 in the present disclosure can divide the space within the battery pack 100 and enhance the structural strength of the shell assembly 2.

In some embodiments of the present disclosure, a plurality of mounting blocks 22 is arranged in each accommodating cavity 211, the mounting blocks 22 are arranged on two side beams 212 arranged oppositely of the tray 21 in the first direction, and at least one of the plurality of mounting blocks 22 is arranged with a positioning portion 221, the pressure plate 3 is arranged with a positioning fitting portion 301, and the positioning fitting portion 301 is positioned and matched with the positioning portion 221 to position and match the pressure plate 3 with the mounting block 22, thereby assisting the assembly of the pressure plate 3.

The pressure plate 3 is assembled and fixed by a mounting block 22, which can support the mounting plate and serve to form a mounting point for assembling the pressure plate 3. The pressure plate 3 is constructed as a plate-like structure, and in order to satisfy a lightweight design, the volume of the mounting blocks 22 can be reduced, and the pressure plate 3 can be supported by providing a plurality of mounting blocks 22.

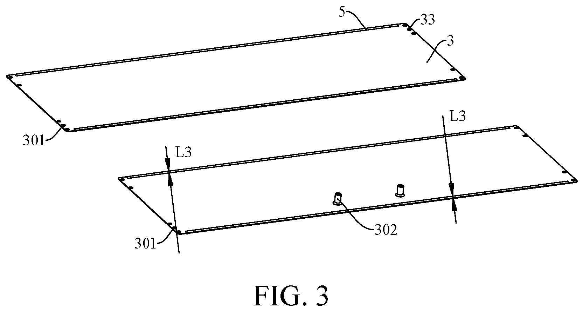

Combined with FIG. 2 and FIG. 3, the pressure plate 3 is constructed as a rectangular plate body, and four mounting blocks 22 are respectively arranged in each accommodating cavity 211, and the four mounting blocks 22 are respectively arranged adjacent to four top corners of the pressure plate 3, so as to enhance the support and fixing effect of the mounting blocks 22 on the pressure plate 3. At least one of the four mounting blocks 22 is arranged with a positioning portion 221, and a positioning fitting portion 301 is arranged on the pressure plate 3, so that the pressure plate 3 and the mounting block 22 are positioned by the positioning fitting of the positioning portion 221 and the positioning fitting portion 301, thereby simplifying assembly of the pressure plate 3.

Wherein the number of the positioning portions 221 is the same as the number of the positioning fitting portions 301, that is, when one of the four mounting blocks 22 is arranged with the positioning portion 221, correspondingly, one positioning fitting portion 301 is arranged on the pressure plate 3; When two of the four mounting blocks 22 are arranged with the positioning portions 221, correspondingly, the pressure plate 3 is arranged with two positioning engagement portions 301 corresponding to the two positioning portions 221 arranged on the mounting blocks 22.

In some embodiments of the present disclosure, one of the positioning portion 221 and the positioning fitting portion 301 is configured as a positioning protrusion, and the other of the positioning portion 221 and the positioning fitting portion 301 is configured as a positioning groove. When the positioning projection extends into the positioning groove, the pressure plate 3 can be positioned and matched with the mounting block 22, and a mistake-proofing effect can be achieved.

Referring to FIG. 2 and FIG. 3, the positioning portion 221 is configured as a positioning groove, and the positioning fitting portion 301 is configured as a positioning projection, and the positioning projection is arranged in the positioning groove when the pressure plate 3 is placed on the mounting seat, to positionally fit the pressure plate 3 with the mounting block 22. When the position of the pressure plate 3 is reversed, the positioning protrusion cannot fit in the positioning groove, and the positioning protrusion will abut against the mounting block 22 for setting the positioning groove. At this time, the top corner of the pressure plate 3 where the positioning protrusion is arranged will tilt up, which will prompt the operator and a mistake-proofing effect can be achieved.

When the positioning portion 221 is arranged on each of the four positioning blocks, the shapes of the positioning protrusions and the positioning grooves can be designed to meet the positioning requirements, and the shapes and sizes of the positioning protrusions and the positioning grooves are not specifically limited here.

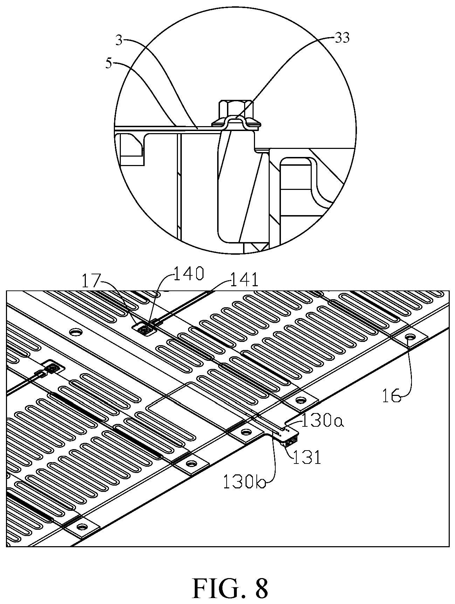

As shown in FIG. 3 and FIG. 8, in some embodiments of the present disclosure, at least one of the two pressure plates 3 is arranged with an anti-error protrusion 33, and the anti-error protrusion 33 is formed on the surface of the side of the pressure plate 3 facing away from the battery 1, and protrudes upward. During the assembly process of the pressure plate 3, the position of the anti-error protrusion 33 can be observed to determine whether the pressure plate 3 is anti-error, thereby achieving a good error-proofing effect and helping to improve the assembly efficiency of the pressure plate 3.

As shown in FIG. 3, in some embodiments of the present disclosure, there are two pressure plates 3, the two pressure plates 3 are respectively arranged correspondingly to the plurality of batteries 1 in the two accommodating cavities 211, and one of the two pressure plates 3 is arranged with a first mounting portion 302, and the partition beam 4 is arranged with a second mounting portion 41, the first mounting portion 302 and the second mounting portion 41 are spaced apart in the second direction, and are used to install the distribution box 6. The distribution box 6 in the present disclosure is installed and fixed by the partition beam 4 and the pressure plates 3, fully utilizing components in battery pack 100.

The battery pack 100 is arranged with a distribution box 6, and the distribution box 6 in the present disclosure is disposed above the pressure plate 3 and fixed by cooperating with the first mounting portion 302 and the second mounting portion 41. By arranging the distribution box 6 in the upper area of the battery pack 100, the free space of the whole vehicle (the electrical device with the battery pack 100) can be fully utilized to ensure the arrangement of battery cells in the tray 21, and the saved space can be used for arranging a larger number of batteries 1 to improve the battery life of the battery pack 100.

As shown in FIG. 3, in the embodiment of the present disclosure, the first mounting portion 302 is configured as a mounting post, the mounting post is arranged with a threaded hole, and the mounting post is plug-in and matched with the shell of the distribution box 6, and is threaded with a threaded connector to connect the shell with the pressure plate 3.

The distribution box 6 is formed with a mounting structure (such as a slot or a hole) matched with the mounting post, and a threaded connector can be threaded with the threaded hole through the mounting structure to fixedly connect the distribution box 6 with the pressure plate 3. Wherein, the mounting post can be positioned and matched with the shell of the distribution box 6 during the assembly process, thereby reducing the difficulty of assembling the distribution box 6 and the pressure plate 3.

In some embodiments of the present disclosure, the second mounting portion 41 is configured as a mounting seat, the mounting seat protrudes from the upper surface of the partition beam 4 to one side of the distribution box 6, and the mounting seat is connected to the distribution box 6. Wherein, the mounting seat can support the distribution box 6 and is fixedly connected with the distribution box 6. Wherein, a connection structure (such as a threaded hole, etc.) can be formed at the mounting seat.

As a result, the distribution box 6 can be mounted by the first mounting portion 302 and the mounting portion 41, and the distribution box 6 can be disposed in a region above the battery 1.

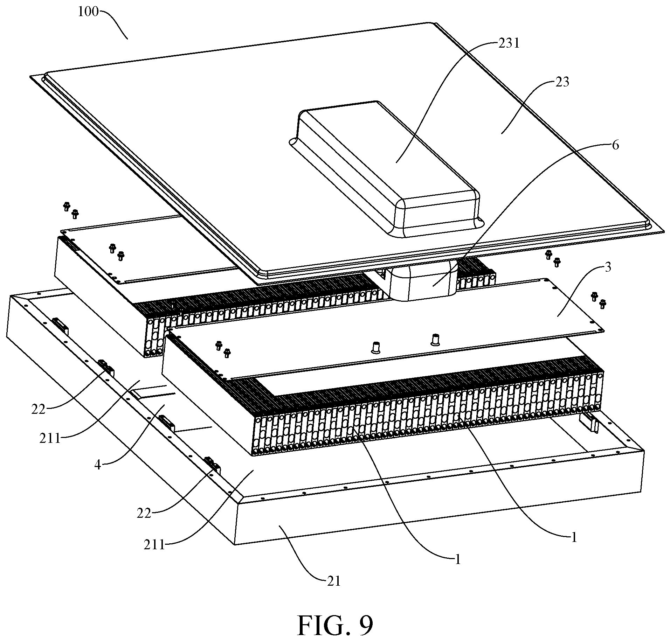

As shown in FIG. 9, in some embodiments of the present disclosure, the shell assembly 2 further includes an upper cover 23, the upper cover 23 is snap-fitted with the tray 21 to define a cavity, and a bump 231 is formed on the upper cover 23, and the bump 231 is disposed correspondingly to the distribution box 6 to form a space for arranging the distribution box 6.

In some embodiments of the present disclosure, in the projection of the bottom surface of the shell assembly 2 (i.e., the projection in the vertical direction), the projection area of the plurality of batteries 1 is S1, and the overlapping area of the projection of the pressure plate 3 on the bottom surface of the shell assembly 2 and the projection of the plurality of batteries 1 on the bottom of the shell assembly 2 is S2, and the relationship is satisfied: 0.6 S 1 ≤ S 2 < S 1. Wherein, S2 represents an overlapping area between the pressure plate 3 and the plurality of batteries 1, the pressure plate 3 and the batteries 1 are arranged in a partially corresponding manner.

S2 = 0.6 S1, so that the size and weight of the pressure plate 3 can be sufficiently reduced while ensuring the constraint effect of the pressure plate 3 on the battery 1, and the lightweight design requirement can be met.

In some embodiments of the present disclosure, in the projection of the bottom surface of the shell assembly 2, the pressure plate 3 has a first axis of symmetry extending in a first direction, and the first symmetry axis coincides with a second symmetry axis of the plurality of batteries 1 extending in the first direction.

Wherein, in the projection of the bottom surface of the shell assembly 2, the projection of the pressure plate 3 is rectangular, the rectangular projection has two symmetry axes, the two symmetry axes extend along the first direction and the second direction respectively, and the first symmetry axis is the one extending along the first direction among the two symmetry axes; The plurality of batteries have a second symmetry axis extending in the first direction, and the first symmetry axis coincides with the second symmetry axis of the plurality of batteries 1 arranged in the first direction. As a result, the constraining force of the pressure plate 3 on the plurality of batteries 1 is uniformly distributed.

The projected shape of the pressure plate 3 is not limited to a rectangle, and may be an axisymmetric figure such as an isosceles trapezoid or an hourglass shape.

Referring to FIG. 6, in some embodiments of the present disclosure, in the second direction, the size ratio of the pressure plate 3 to the battery 1 is between 0.6-1, so that the pressure plate 3 and the battery 1 are sufficiently corresponding to each other, and ensuring constraining effect of pressure plate 3 on battery.

As shown in FIG. 6, in the second direction, the dimension of the pressure plate 3 is the width dimension of the pressure plate 3, and the dimension of the battery 1 is the length dimension of the battery 1, that is, the ratio of the width dimension of the pressure plate 3 to the length dimension of the battery 1 is in a range of 0.6-1.

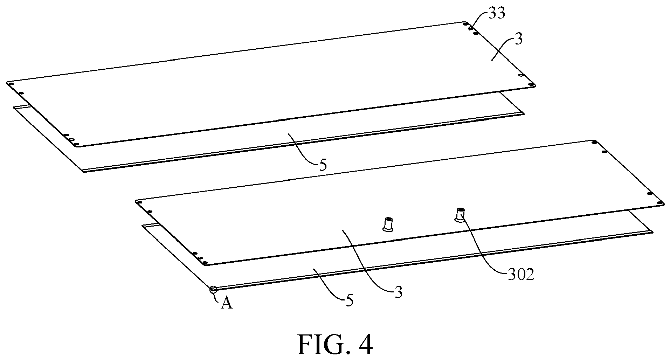

As shown in FIG. 3 and FIG. 4, in some embodiments of the present disclosure, the battery pack 100 further includes an insulating layer 5, the insulating layer 5 is disposed on the pressure plate 3, and at least a part of the insulating layer 5 is disposed between the pressure plate 3 and the battery 1 to improve the insulating protection performance between the pressure plate 3 and the battery 1.

Wherein, the pressure plate 3 is usually constructed as a metal pressure plate 3, and the metal pressure plate 3 has high structural strength, but the metal pressure plate 3 usually has conductivity, so insulation protection is required at the pressure plate 3. In the present disclosure, by providing the insulating layer 5 on the pressure plate 3, the insulating performance of the pressure plate 3 is improved, a short circuit between the pressure plate 3 and the battery 1 is prevented, and the safety of the battery pack 100 is improved.

Referring to FIG. 4, in some embodiments of the present disclosure, the insulating layer 5 includes an insulating layer main body 51 and an insulating edge 52, the insulating layer main body 51 is arranged on a side surface of the pressure plate 3 opposite to the battery 1, and at least a part of the insulating layer main body 51 is arranged at a corresponding area between the pressure plate 3 and the plurality of batteries 1, so as to sufficiently separate the pressure plate 3 from the plurality of batteries 1 and enhance the insulation protection at the pressure plate 3.

Referring to FIG. 3, the insulating edge 52 is connected to the insulating layer main body 51, and the insulating edge 52 is used to cover the edges of both sides of the pressure plate 3 in the second direction. Both side edges of the pressure plate 3 in the second direction fall in the projection of the battery 1 in the vertical direction, and there may be burrs at the edges of the pressure plate 3, and there is a risk that the burrs scratch the insulating material on the surface of the battery 1. By arranging the insulating layer 5 to cover the edges of the pressure plate 3, problems such as short circuit caused by scratching the battery 1 can be prevented, and the safety of the battery pack 100 can be improved.

As shown in FIG. 6, in some embodiments of the present disclosure, in the projection of the bottom surface of the shell assembly 2, the minimum distance between the pressure plate 3 and the edge of the battery on the same side in the second direction is L1 and L2, and the relationship is satisfied: 70 mm ≤ L 1 ≤ 100 mm and 70 mm ≤ L 2 ≤ 100 mm.

The second direction includes two sides (the first side and the second side), so the distance between the pressure plate 3 and the edge of the battery 1 on the same side in the second direction includes two values (i.e. L1 and L2). Referring to FIG. 6, the minimum distance between the edge of the pressure plate 3 and the battery 1 on the first side and the edge of the battery 1 on the first side is L1 and the relationship is satisfied: 70 mm ≤ L 1 ≤ 100 mm, and the minimum distance between the edge of the pressure plate 3 on the second side and the edge of the battery 1 on the second side is L2 and the relationship is satisfied: 70 mm ≤ L 2 ≤ 100 mm.

Wherein, the first side and the second side are opposite sides of the pressure plate 3 in the second direction. When the arrangement positional relationship of the pressure plate 3 satisfies the above parameter range, the pressure plate 3 is arranged at the middle region of the battery 1 in the second direction (also in the length direction of the battery 1), so that it can sufficiently correspond to the battery 1 and the battery 1 is well constrained.

In some embodiments of the present disclosure, L1 = L2, for example: L1 = L2 = 70 mm, at this time, the pressure plate 3 is arranged in the middle of the battery 1, and the battery 1 is well constrained.

In the embodiment of the present disclosure, the insulating edge 52 includes: a first covering portion 521 and a second covering portion 522, the first covering portion 521 is connected to the insulating layer main body 51, and the first covering portion 521 is arranged opposite to the side wall of the pressure plate 3 in the second direction, and the second covering portion 522 is connected to the first covering portion 521, and extends along the second direction, and is disposed in fitting contact with the surface of the pressure plate 3 on the side away from the battery 1, so as to form two U-shaped insulating edge 52 structures with openings opposite to each other on opposite sides of the pressure plate 3 in the second direction. The insulating edge 52 structure can cover the edge of the pressure plate 3 to improve the insulation protection performance of the pressure plate 3.

As shown in FIG. 3, in some embodiments of the present disclosure, the width dimension of the second covering portion 522 in the second direction is L3, and the relationship is satisfied: 2 mm ≤ L 3 ≤ 5 mm. L3 ≤ 3 mm, improves the insulation protection performance at the edge of the pressure plate 3 while saving the material of the insulation layer 5 can be saved and reducing the costs.

In some embodiments of the present disclosure, the insulating layer 5 is configured as a PI film (Polyimide Film), and the PI film has good insulating properties.

In some embodiments of the present disclosure, the battery pack 100 further includes an adhesive layer 7, and the adhesive layer 7 is used to bond the insulating layer main body 51 and the battery 1 to fix the pressure plate 3 and the battery 1. Wherein, the adhesive layer 7 is a structural adhesive, and the thickness of the structural adhesive is 1 mm.

According to the battery pack 100 of the embodiment of the present disclosure, the pressure plate 3 is fixed to the tray 21 by the mounting block 22, and an poka-yoke structure (i.e., the positioning fitting portion 301) is formed on the pressure plate 3, which can assist in the assembly of the pressure plate 3, and the pressure plate 3 only partially corresponds to the battery 1 holding portion, so that the size of the pressure plate 3 can be reduced, the amount of glue can be reduced, and the production cost of the battery pack 100 can be reduced.

According to the electrical device according to the embodiment of the present disclosure, the electrical device includes the battery pack 100 described above, and the battery pack 100 is light in weight, satisfies a lightweight design, and has a low production cost.

In the description of the present disclosure, it should be understood that the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential" and the like indicate orientations or positional relationships based on the orientations or positional relationships shown in the accompanying drawings, and are only for the convenience of describing the present disclosure and simplifying the description, and do not indicate or imply that the device or element referred to must have a specific orientation, be constructed and operated in a specific orientation, and therefore should not be understood as a limitation on the present disclosure.

Furthermore, the terms "first" and "second" are used for descriptive purposes only and should not be construed as indicating or implying relative importance or implicitly specifying the number of the technical features being referred to. Thus, a feature identified as "first" or "second" may explicitly or implicitly include one or more of the features. Throughout the description of this disclosure, "plurality" means more than two, unless otherwise specifically defined.

In this disclosure, unless otherwise expressly specified or limited, terms such as "mounted," "connected," "connect," and "fixed" should be understood in a broad sense. For example, they may refer to fixed connections, detachable connections, or integration; mechanical connections or electrical connections; direct connections or indirect connections through an intermediate medium; and internal connections between two components or interactions between two components. Those skilled in the art will understand the specific meanings of these terms in this disclosure based on specific circumstances.

In this disclosure, unless otherwise expressly specified or limited, when a first feature is "above" or "below" a second feature, it may mean that the first and second features are in direct contact, or the first and second features are in indirect contact through an intermediate medium. Furthermore, when a first feature is "above" a second feature, it may mean that the first feature is directly above or diagonally above the second feature, or simply means that the first feature is at a higher level than the second feature. When a first feature is "below" a second feature, it may mean that the first feature is directly below or diagonally below the second feature, or simply means that the first feature is at a lower level than the second feature.

In the description of this specification, the description with reference to the terms "one embodiment", "some embodiments", "example", "specific example", or "some examples" means that the specific features, structures, materials or characteristics described in conjunction with the embodiment or example are included in at least one embodiment or example of the present disclosure. In this specification, the schematic representations of the above terms do not necessarily refer to the same embodiment or example. Moreover, the specific features, structures, materials or characteristics described can be combined in any one or more embodiments or examples in a suitable manner. In addition, those skilled in the art can combine and combine different embodiments or examples described in this specification and features of different embodiments or examples without contradiction.

Although the embodiments of the present disclosure have been shown and described above, the above embodiments are exemplary and should not be understood as limitations on the present disclosure. A person skilled in the art may change, modify, replace and modify the above embodiments within the scope of the present disclosure.

## Claims

1. A battery pack, comprising:
a plurality of batteries (1);
a shell assembly (2), wherein a plurality of batteries (1) are sequentially arranged in a first direction in a cavity of the shell assembly (2);
a pressure plate (3), the pressure plate (3) being arranged in the cavity and connected to the shell assembly (2), and extending in the first direction and being arranged above the plurality of batteries (1) to constrain the plurality of batteries (1);
wherein the dimension of the pressure plate (3) in a second direction is not larger than the dimension of the battery (1) in the second direction, and the second direction is arranged perpendicular to the first direction.

2. The battery pack according to claim 1, wherein the projection area of the plurality of batteries (1) on the bottom surface of the shell assembly (2) is S1, and the overlapping area of the projection of the pressure plate (3) on the bottom surface of the shell assembly (2) and the projection of the plurality of batteries (1) on the bottom surface of the shell assembly (2) is S2, and the relationship is satisfied: 0.6 S1 ≤ S2 < S1.

3. The battery pack according to claim 1 or 2, wherein in a projection of the bottom surface of the shell assembly (2), the pressure plate (3) has a first symmetry axis extending in a first direction, and the plurality of batteries have a second symmetry axis extending in a first direction, the first symmetry axis coincides with the second symmetry axis.

4. The battery pack according to any one of claims 1 to 3, wherein the ratio of the dimension of the pressure plate (3) to the dimension of the battery (1) in the second direction is between 0.6 and 1.

5. The battery pack of any one of claims 1 to 4, wherein the shell assembly (2) comprises:
a tray (21) for accommodating the battery (1);
a mounting block (22) arranged on the tray (21) and used for mounting the pressure plate (3).

6. The battery pack according to claim 5, wherein the shell assembly (2) further comprises a partition beam (4) arranged in the tray (21) and extends in the first direction, the partition beam (4) is used to divide the cavity of the shell assembly (2) to form two accommodating cavities (211) each for arranging a plurality of the batteries (1).

7. The battery pack according to claim 6, wherein each of the accommodating cavities (211) being arranged with a plurality of the mounting blocks (22), the mounting blocks (22) being arranged on two side beams (212) of the tray (21) disposed oppositely in the first direction, and at least one of the plurality of the mounting blocks (22) being arranged with a positioning portion (221), and the pressure plate (3) being arranged with a positioning fitting portion (301), and the positioning fitting portion (301) being positioned and fitted with the positioning portion (221).

8. The battery pack according to claim 7, wherein one of the positioning portion (221) and the positioning fitting portion (301) being configured as a positioning projection, and the other of the positioning portion (221) and the positioning fitting portion (301) being configured as a positioning groove.

9. The battery pack according to any one of claims 6 to 8, wherein two pressure plates (3) are comprised, the two pressure plates (3) are respectively arranged correspondingly to the plurality of batteries (1) in the two accommodating cavities (211), and one of the two pressure plates (3) being arranged with a first mounting part (302), and the partition beam (4) being arranged with a second mounting portion (41), the first mounting portion (302) and the second mounting portion (41) are arranged spaced apart along the second direction, and are used for installing the distribution box (6).

10. The battery pack according to claim 9, wherein the first mounting portion (302) being configured as a mounting post, the mounting post being arranged with a threaded hole, and the mounting post is plug-in and matched with the shell of the distribution box (6), and is threaded with a threaded connector to connect the shell to the pressure plate (3);
and/or the second mounting portion (41) being configured as a mounting seat that protrudes from an upper surface of the partition beam (4) toward one side of the distribution box (6), and the mounting seat being connected to the distribution box (6).

11. The battery pack according to any one of claims 1 to 10, further comprising an insulating layer (5) arranged on the pressure plate (3) and at least part of the insulating layer (5) arranged between the pressure plate (3) and the battery (1).

12. The battery pack of claim 11, wherein the insulating layer (5) comprises:
an insulating layer body (51) arranged on a side surface of the pressure plate (3) opposite the battery (1), and at least part of the insulating layer body (51) arranged at a corresponding area between the pressure plate (3) and a plurality of batteries (1);
an insulating edge (52) connected to the insulating layer body (51) and used to cover edges on opposite sides of the pressure plate (3) in the second direction.

13. The battery pack according to claim 12, wherein the minimum distance between the pressure plate (3) and the edge of the battery (1) on the same side in the second direction in the projection of the bottom surface of the case assembly (2) is L1, L2, and the relationship is satisfied: 70 mm ≤ L 1 ≤ 100 mm and 70 mm ≤ L 2 ≤ 100 mm.

14. The battery pack of claim 12 or 13, wherein the insulating edge (52) comprises:
a first covering portion (521) connected to the insulating layer body (51) and arranged opposite to a side wall of the pressure plate (3) in the second direction;
a second covering portion (522) connected to the first covering portion (521), extends in the second direction, and being arranged in contact with a surface of the pressure plate (3) on a side facing away from the battery (1).

15. The battery pack according to claim 14, wherein the width dimension of the second covering portion (522) in the second direction is L3 and the relationship is satisfied: 2 mm ≤ L 3 ≤ 5 mm.

16. An electrical device comprising a battery pack according to any one of claims 1 to 15.
